# EUROPEAN PATENT SPECIFICATION

(11) **EP 1 675 361 B1**
(45) Date of publication and mention of the grant of the patent: **10.10.2012**
(21) Application number: 05027596.5
(22) Date of filing: 16.12.2005
(51) Int. Cl.: H04M 1/02, H04M 1/725

(54) **Mobile communication terminal with different operation modes selected by the opening direction of folder cover and method thereof**
Tragbares Kommunikationsgerät mit, von der Öffnungsrichtung eines klappbaren Deckels bestimmten, verschiedenen Arbeitsmodi und dazugehöriges Verfahren
Terminal de communication portatif comportant des modes d'opération différents sélectionnés par la direction d'ouverture d'un couvercle pivotant et procédé correspondant

(30) Priority: 21.12.2004 KR 2004109614; 13.05.2005 KR 2005040176
(43) Date of publication of application: 28.06.2006
(73) Proprietor: Samsung Electronics Co., Ltd., Suwon-si, Gyeonggi-do, 443-742 (KR)
(72) Inventor: Won, Jong-Sang c/o Samsung Electronics Co. Ltd., Suwon-si, Gyeonggi-do (KR)
(74) Representative: Hutter, Jacobus Johannes

(56) References cited:
- WO-A-01/84269
- WO-A-2004/049150
- WO-A-2004/054210
- WO-A-2005/043870
- US-A1- 2002 052 228
- US-B1- 6 549 789

## Description

### BACKGROUND OF THE INVENTION

### Field of the Invention

The present invention relates generally to a mobile communication terminal. In particular, the present invention relates to a mobile communication terminal for changing an operation mode based on an opening direction of a folder, and a method thereof.

### Description of the Related Art

In general, a mobile communication terminal refers to equipment for providing a communication function allowing mobile calling or data exchange, such as a cellular phone, a Personal Digital Assistant (PDA), a Personal Communication Services (PCS) phone, an International Mobile Telecommunication-2000 (IMT-2000) terminal, and a Global System for Mobile communication (GSM) terminal.

The mobile communication terminal is commonly used and is considered a portable necessity.

Therefore, the size of the mobile communication terminal is following a trend toward miniaturization and toward providing multimedia-oriented services having more functionality. Specifically, the mobile communication terminal will gradually advance toward a miniaturized, multi-function, multi-purpose mobile terminal, and will be adaptable to various multimedia or Internet environments.

A conventional generalized mobile communication terminal is classified into several types based on appearance. For example, the mobile communication terminal is classified into a bar-type, flip-type and folder-type mobile communication terminals.

In the bar-type mobile communication terminal, a single bar-type housing is used. In the flip-type mobile communication terminal, a flip cover can be rotatably adapted to a bar-type housing using a hinge unit. In the folder -type mobile communication terminal, a folder cover is rotatably and foldably connected to a single bar-type housing using a hinge unit.

The mobile communication terminal is also classified into rotation-type and sliding-type mobile communication terminals depending on how it opens.

In the rotation-type mobile communication terminal, two housings face each other while being rotatably connected for opening and closing.

The above-described mobile communication terminals will be easily understood by those of ordinary knowledge in the art.

Typically, in the conventional mobile communication terminal, a liquid crystal display has a rectangular display screen. In the case where the rectangular display screen is employed in the folder-type mobile communication terminal, the rectangular display screen is not suited for providing a wide screen view due to its vertical length being longer than its horizontal length. In other words, in the mobile communication terminal allowing a user to view a television program or a video-on-demand (VOD) feature, the display screen should have the horizontal length which is greater than the vertical length in order to provide a wide screen view. Therefore, a biaxial hinge-type mobile communication terminal has been developed where a display screen can be disposed to have a longer horizontal length or a longer vertical length, alternatively.

However, even in the biaxial hinge-type mobile communication terminal, a user must open a folder cover and then enter a detailed menu in a standby mode state so as to use various desired functions.

In other words, in the biaxial hinge-type mobile communication terminal, only the display screen is disposed to alternatively have the longer horizontal length or the longer vertical length in the liquid crystal display, and the user must press a key and enter the detailed menu in the standby mode state to use the functions.

Further, there is the inconvenience of when the user uses a variety of functions of the mobile communication terminal in a horizontal view mode where the display screen has the longer horizontal length, the user must turn on the mobile communication terminal in a vertical view mode where the display screen has the longer vertical length and then, access the horizontal view mode using a menu.

Document WO 2004/054210 A1 discloses a radio communication terminal comprising a first terminal member carrying a first user interface, a second terminal member carrying a second user interface, and a first hinge device connecting said terminal members and having a first rotation axis about which the terminal can be unfolded from a closed position to a first open position. The terminal further has a second hinge device which connects said terminal members such that the terminal can be unfolded about a second rotation axis, perpendicular to said first axis, to a second open position. This way, the terminal may be unfolded in the elongate extension in a clamshell manner to assume a phone mode orientation, and unfolded transverse to the elongate extension in a laptop-like manner to assume a computer mode orientation.

Document US 2002/0052228 Aldiscloses a power control apparatus in a foldable portable radio terminal which includes a main body, a sub-body, a key-pad including a power key on the main body, an external function key which can be key-input by a user even if the sub-body is shut on the main body is disclosed. The power control apparatus includes a first switch, a second switch, and a control unit for controlling the first and second switch according to powered-on/off state of the terminal. One end of each of the first and second switch is connected in common at a first node connected to the external function key and the other end of the first switch is connected to a first input end of the control unit, and the other end of the second switch and the power key are connected in common via a second node connected to a second input end of the control unit. According to the invention, the external function key (the automatic folder switch for example) as the power key is realized so that the user can power-on the terminal without opening the sub-body even in the powered-off state of the terminal, and the terminal keys can perform their own functions in the powered-off state of the terminal.

### SUMMARY OF THE INVENTION

It is, therefore, an object of the present invention to provide a mobile communication terminal for changing the operation mode of the mobile communication terminal based on an opening direction of a folder cover, and a method thereof.

Another object of the present invention is to provide a mobile communication terminal for, when power is on in an opened state of a folder cover, changing an operation mode based on an opening direction of a folder cover, and a method thereof.

The problem of the invention is solved by a mobile communication terminal according to claim 1 and a method according to claim 30. Further advantageous embodiments are defined in the dependent claims.

There is provided a method for changing an operation mode in a mobile communication terminal having a main housing and a folder cover facing the main housing while closed with respect to first and second hinge axes, and moving away from the main housing when opening, the method comprising the steps of outputting a sense signal based on the opening direction of the folder, and changing the operation mode depending on the outputted sense signal.

There is provided a mobile communication terminal having a main housing and a folder cover facing the main housing while closed with respect to first and second hinge axes, and moving away from the main housing when opening, the mobile communication terminal comprising a sensor unit for outputting a sense signal based on the opening direction of the folder, and a controller for controlling and changing an operation mode of the mobile communication terminal depending on the outputted sense signal.

In an exemplary implementation according to an aspect of the present invention, the mobile communication terminal further comprises a display unit for displaying a state of the operation mode of the mobile communication terminal changed depending on the sense signal.

In an exemplary implementation according to an aspect of the present invention, the mobile communication terminal further comprises a key input unit for changing luminous colors of keys under the control of the controller depending on the operation mode.

### BRIEF DESCRIPTION OF THE DRAWINGS

The above and other exemplary objects, features and advantages of the present invention will become more apparent from the following detailed description when taken in conjunction with the accompanying drawings in which:
FIG. 1 is a perspective view illustrating a biaxial hinge-type mobile communication terminal according to an embodiment of the present invention;
FIG. 2 is a plan view of FIG. 1;
FIG. 3 is a perspective view illustrating a state where a folder cover is opened with respect to a first hinge axis in a biaxial hinge-type mobile communication terminal according to an embodiment of the present invention;
FIG. 4 is a perspective view illustrating a state where a folder cover is opened with respect to a second hinge axis in a biaxial hinge-type mobile communication terminal according to an embodiment of the present invention;
FIG. 5 is a block diagram illustrating a biaxial hinge-type mobile communication terminal according to an embodiment of the present invention;
FIGs. 6A to 6C are exemplary views illustrating an operation of a sensor unit of a biaxial hinge-type mobile communication terminal according to an embodiment of the present invention;
FIGs. 7A to 7C are exemplary views illustrating an operation of a sensor unit of a biaxial hinge-type mobile communication terminal according to another embodiment of the present invention;
FIG. 8 is a flowchart illustrating an operation of a biaxial hinge-type mobile communication terminal according to an embodiment of the present invention;
FIG. 9 is a flowchart illustrating an operation of a biaxial hinge-type mobile communication terminal according to another embodiment of the present invention; and
FIGs. 10A to 10D are exemplary views illustrating an operation process of a biaxial hinge-type mobile communication terminal according to an embodiment of the present invention.

It should be understood that throughout the drawing figures like reference numbers refer to like features, structures and elements.

### DETAILED DESCRIPTION OF EXEMPLARY EMBODIMENTS

Exemplary embodiments of the present invention will now be described in detail with reference to the annexed drawings. In the following description, a detailed description of known functions and configurations incorporated therein has been omitted for conciseness.

It should be noted that a hinge axis is directed in a horizontal direction or in a vertical direction to allow the opening and closing of a main housing and an auxiliary housing (that is, a folder cover) in a mobile communication terminal according to an embodiment of the present invention.

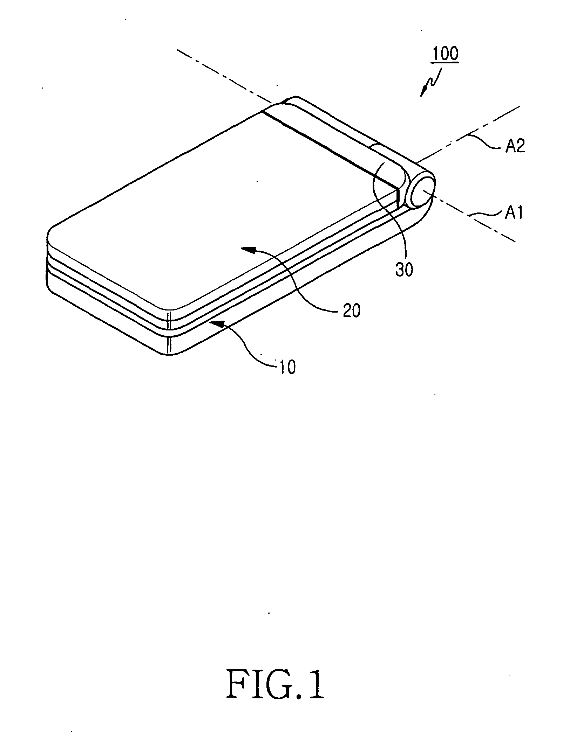

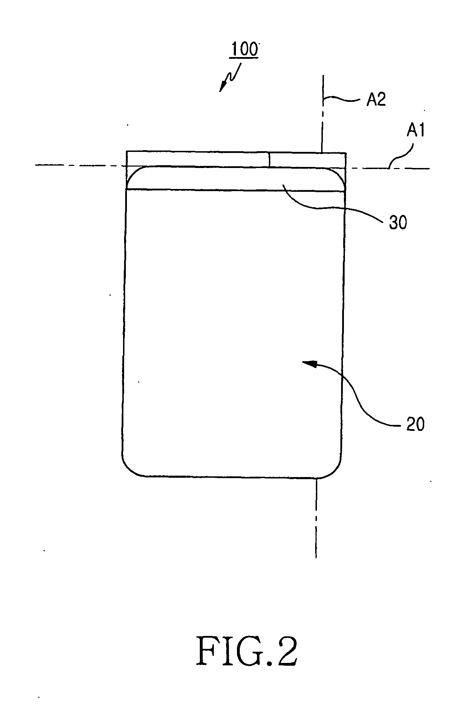

FIG. 1 is a perspective view illustrating a biaxial hinge-type mobile communication terminal according to an embodiment of the present invention, and FIG. 2 is a plan view of FIG. 1.

Referring to FIGs. 1 and 2, a mobile communication terminal 100 comprises the main housing 10; a first hinge axis (A1) directed in the horizontal direction of the main housing 10; a second hinge axis (A2) directed in the vertical direction of the main housing 10; and the auxiliary housing 20 (folder cover) facing the main housing 10 while opened and closed with respect to the first hinge axis (A1), and facing the main housing 10 while opened and closed with respect to the second hinge axis (A2). In other words, the folder cover 20 is rotated with respect to each of the first and second hinge axes (A1, A2) to move toward or away from the main housing 10.

As shown in FIG. 2, the main housing 10 and the folder cover 20 are connected and face each other with respect to the first hinge axis (A1) in a box shape configuration. The main housing 10 and the folder cover 20 have different horizontal and vertical lengths, respectively. In an exemplary implementation, the main housing 10 and the folder cover 20 have longer vertical lengths than horizontal lengths.

The first hinge axis (A1) is extended in an upper direction of the main housing 10, and the second hinge axis (A2) is extended in a side direction of the folder cover 20.

The first hinge axis (A1) and the second hinge axis (A2) vertically intersect each other, and the second hinge axis (A2) is rotated with respect to the first hinge axis (A1).

A connection member 30 is further provided between the main housing 10, and the folder cover 20 being the auxiliary housing. The connection member 30 is rotated along the first hinge axis (A1), and functions as a medium for rotatably connecting the folder cover 20 to the main housing 10.

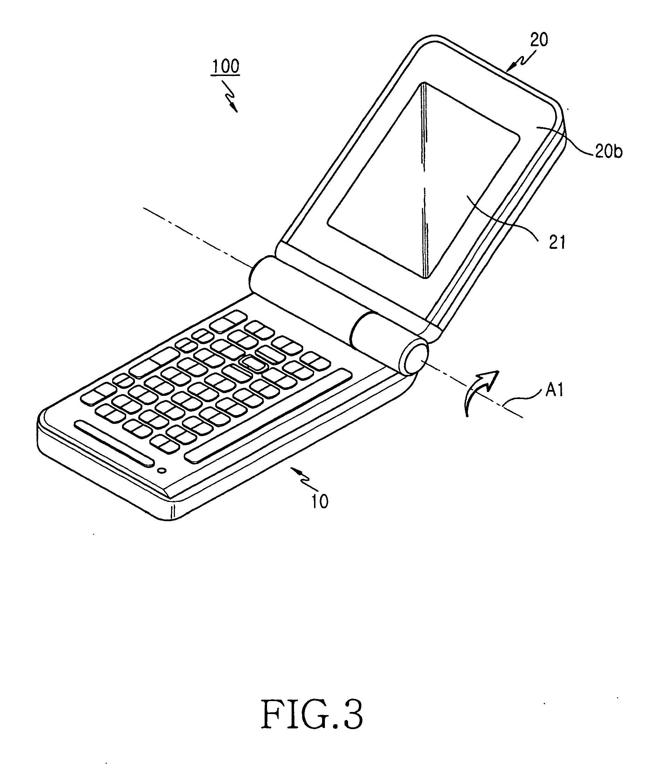

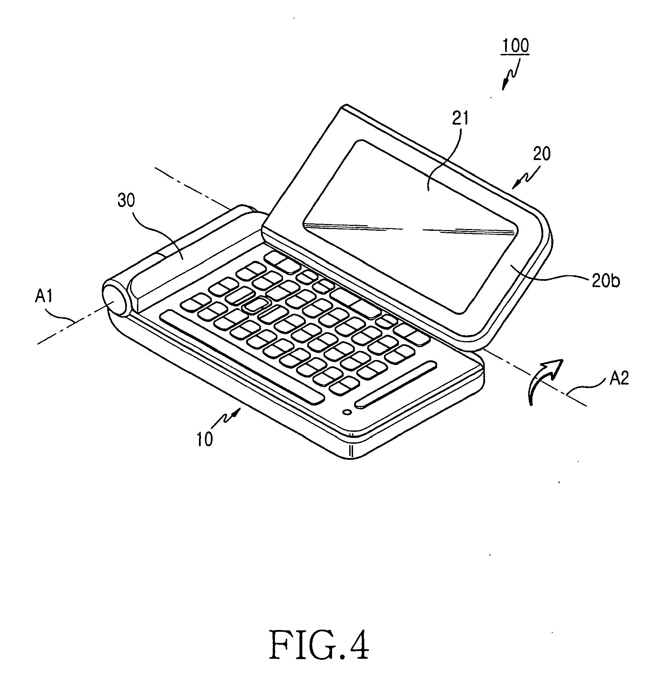

FIG. 3 is a perspective view illustrating a state where the folder is opened with respect to the first hinge axis in the biaxial hinge-type mobile communication terminal according to an embodiment of the present invention. FIG. 4 is a perspective view illustrating a state where the folder is opened with respect to the second hinge axis in the biaxial hinge-type mobile communication terminal according to an embodiment of the present invention.

Referring to FIGs. 3 and 4, FIG. 3 illustrates the state where the folder cover 20 is opened with respect to the first hinge axis (A1) in the mobile communication terminal 100. FIG. 4 illustrates the state where the folder 20 is opened with respect to the second hinge axis (A2) in the mobile communication terminal 100. The folder cover 20 has a liquid crystal display (LCD) 21 mounted on its bottom surface 20b. LCD 21 has a shorter horizontal length than a vertical length (that is, a vertical view mode).

In FIG. 4, the LCD 21 has a longer horizontal length than the vertical length, which is a horizontal view mode. Accordingly, in an exemplary implementation, the mobile communication terminal 100 is in the state shown in FIG. 3 when it, for example, performs a phone call function in a general phone mode. While in another exemplary implementation the mobile communication terminal 100 is in the state shown in FIG. 4 when, for example, it is used to view a television program or a video-on-demand (VOD) program or is operated in an e-mail mode for transmitting editing and receiving an electronic mail (e-mail) message.

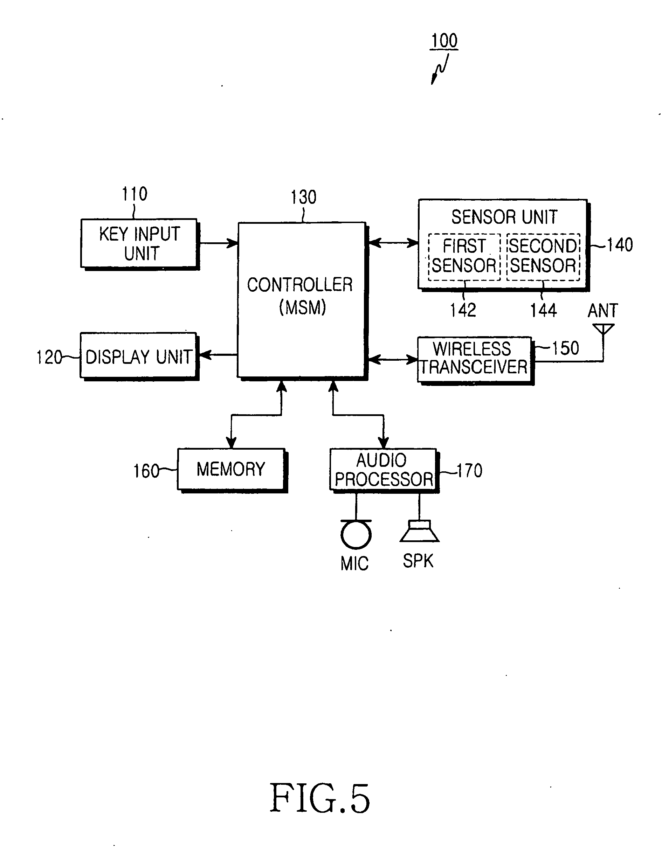

FIG. 5 is a block diagram illustrating a biaxial hinge-type mobile communication terminal according to an embodiment of the present invention. According to exemplary embodiments of the present invention, the mobile communication terminal comprises the main housing, and the folder cover facing the main housing when closed and opening with respect to the first and second hinge axes.

The mobile communication terminal 100 comprises, for example, a key input unit 110, a display unit 120, a controller, a Mobile Station Modem (MSM) chip 130, a sensor unit 140, a wireless transceiver 150, a memory 160, and an audio processor 170.

The key input unit 110 has, for example, a key matrix structure (not shown) comprising a character key, a numeric key, a variety of function keys, and an external volume key. The key input unit 110 outputs a key input signal to the controller 130 corresponding to a key pressed by a user. According to an embodiment of the present invention, the key input unit 110 can have the keys corresponding to two or so light emitting diodes respectively, in order to display color under the control of the controller 130. It is desirable that the light emitting diodes display different colours (for example, blue and green), respectively.

According to an exemplary implementation, the key input unit 110 has a alphanumeric keypad array in a horizontal direction of a conventional mobile communication terminal, and a computer keyboard array (for example, a QWERTY array) in a vertical direction to facilitate the user's editing of an electronic mail (e-mail).

The display unit 120 can employ a liquid crystal display (LCD) to output a variety of display information from the mobile communication terminal. It is desirable that the display unit 120 comprises a LCD controller, a memory for storing image data, the LCD, and the like.

The display unit 120 receives a variety of information from the wireless transceiver 160, and displays the received information. The display unit 120 receives an image signal from an image processor (not shown) and user data from the controller 130, and displays the received image signal and user data.

The display unit 120 displays data for mode execution, during which the mobile communication terminal 100 changes operation mode depending on a sense signal output from the sensor unit 140. The data can be date and time information representing a standby mode state of the mobile communication terminal 100. The data can be also a menu icon used for performing a function of a corresponding mode and the like when the mobile communication terminal 100 is changed to e-mail mode for performing e-mail functions.

In case where the LCD is embodied as a touch screen, the display unit 120 can also serve as an input unit.

The controller 130 controls the overall operation of the mobile communication terminal 100 according to an embodiment of the present invention. The controller 130 changes and controls the operation mode of the mobile communication terminal 100, depending on a variety of key input signals provided from the key input unit 110.

The controller 130 changes the operation mode of the mobile communication terminal 100 depending on the sense signal of the sensor unit 140. The operation mode can be any one of the e-mail mode for performing e-mail functions, and the phone mode for performing a voice call function, a character message transmitting and receiving function and the like that are general functions in the mobile communication terminal.

When the sensor unit 140 outputs a first sense signal, the controller 130 changes the operation mode into a standby mode, which, for example, may be the phone mode, for performing the phone call function in the mobile communication terminal 100.

When the sensor unit 140 outputs a second sense signal, the controller 130 changes the operation mode into the e-mail mode for performing e-mail functions, such as transmitting, editing and receiving e-mails, in the mobile communication terminal 100. The first and second sense signals will be described in the following description for an operation of the sensor unit 140.

In order to sense an opening direction of the folder cover 20 in the mobile communication terminal 100, the sensor unit 140 can include first and second sensors 142 and 144 arranged lengthwise in parallel with each other at predetermined positions of the main housing 10, or can include first and second sensors 142 and 144 respectively provided at predetermined lower and upper positions of the main housing 10. It is certain that the first and second sensors 142 and 144 can also be provided at predetermined upper and lower positions of the folder cover 20, respectively. In the case where the first and second sensors 142 and 144 are magnetic sensors, it is desirable that the folder cover 20 have magnets (not shown) at positions facing the first and second sensors 142 and 144 provided at the main housing 10. Accordingly, when the first and second sensors 142 and 144 of the main housing 10 respectively cannot sense the corresponding magnets due to the opening of the folder cover 20, the sensor unit 140 outputs the first or second sense signal.

The sensor unit 140 senses the opening direction of the folder cover 20, and outputs the sense signal to the controller 130 based on the opening direction of the folder cover 20.

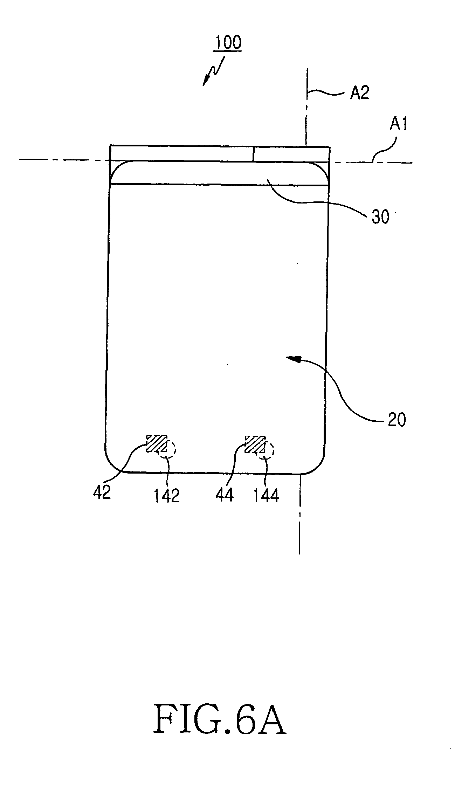

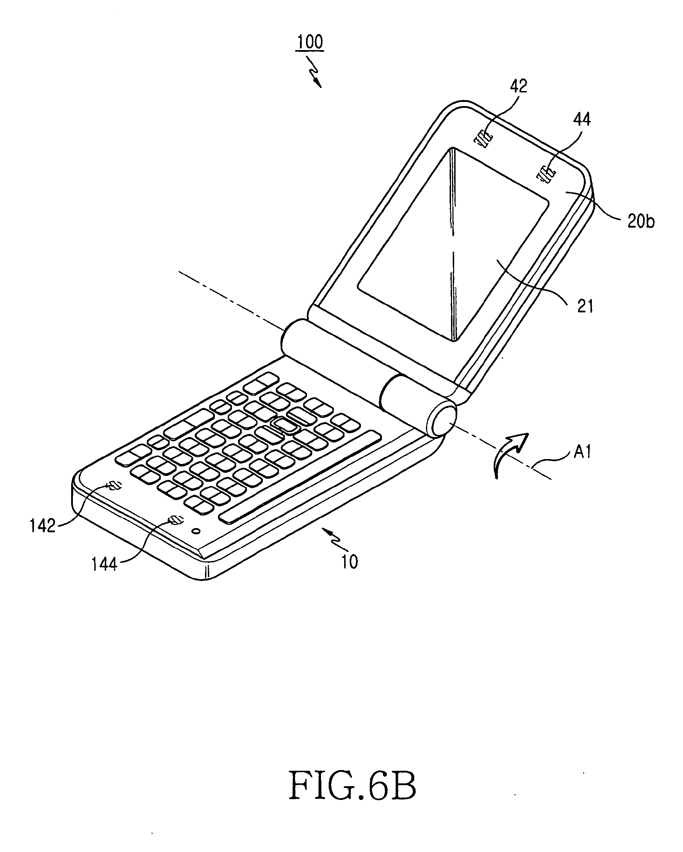

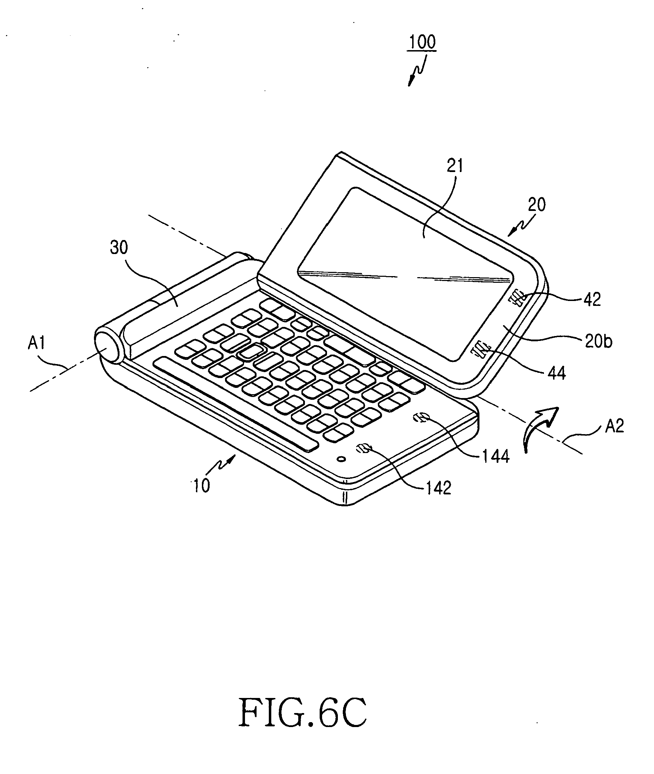

In the case where the first and second sensors 142 and 144 are arranged lengthwise or vertically and are in parallel with each other at predetermined positions as shown in FIG. 6, the sensor unit 140 operates as follows.

When the folder cover 20 is opened with respect to the first hinge axis (A1) directed in the horizontal direction of the main housing 10, and the first and second sensors 142 and 144 concurrently move away from the folder cover 20 (that is, the first and second sensors 142 and 144 no longer sense the magnets provided at the folder cover 20), the sensor unit 140 outputs the first sense signal to the controller 130.

When the folder cover 20 is opened with respect to the second hinge axis (A2) directed in the vertical direction of the main housing 10 and adjacent to and in parallel with one side of the main housing 10, to allow any one of the first and second sensors 142 and 144 to first move away from the folder cover 20 (that is, no longer able to sense the corresponding magnet), the sensor unit 140 outputs the second sense signal to the controller 130.

In case where the first and second sensors 142 and 144 are respectively provided at the predetermined lower and upper positions of the main housing 10, the sensor unit 140 operates as follows.

When the first and second sensors 142 and 144 sense that the folder cover 20 is opened with respect to the first hinge axis (A1) directed in the horizontal direction of the main housing 10, the sensor unit 140 outputs the first sense signal to the controller 130.

When the folder cover 20 is opened with respect to the second hinge axis (A2) directed in the vertical direction of the main housing 10 and adjacent to and in parallel with one side of the main housing 10, to allow the first sensor 142 to sense the opening of the folder cover 20 and the second sensor 144 not to sense the opening of the folder cover 20, the sensor unit 140 outputs the second sense signal to the controller 130. This means that only the second sensor 144 senses the magnet of the folder cover 20.

The wireless transceiver 150, which is a radio frequency (RF) unit, refers to a general constituent unit comprised of a high frequency processor, an intermediate frequency (IF) processor and a base band processor.

The wireless transceiver 150 transmits and receives voice data, character data, image data and control data under the control of the controller 130.

The memory 160 can be comprised of a program memory, a data memory and the like for storing a variety of information, which is necessary for controlling an operation of the mobile communication terminal 100 according to an embodiment of the present invention. The memory 160 stores a variety of information selected depending on user's selection information.

The audio processor 170 receives an electric signal from a microphone, and modulates and converts the received electric signal into voice data. The audio processor 170 receives coded voice data from the wireless transceiver 150, and demodulates the received coded voice data into an electric signal and outputs the demodulated electric signal to a speaker.

In an exemplary implementation of the present invention, the audio processor 170 comprises a coder/decoder (CODEC). The CODEC receives a digital audio signal from the wireless transceiver 150, and converts the received digital audio signal into an analogue signal. Alternatively, the CODEC receives an analog audio signal from the microphone, and converts the received analogue audio signal into a digital audio signal. The CODEC is comprised of a data CODEC for processing packet data and the like, and an audio CODEC for processing an audio signal such as voice data. The data CODEC and the audio CODEC can be also provided separately in the controller 130.

The mobile communication terminal 100 can further comprise, for example, a camera sensor (not shown) and a signal processor (not shown). The camera sensor converts an optic signal, which is sensed when the image is photographed, into an electric signal. The signal processor converts an analogue image signal, which is photographed in the camera sensor, into digital data.

FIGs. 6A to 6C are exemplary views illustrating an operation of the sensor unit of the biaxial hinge-type mobile communication terminal according to an embodiment of the present invention.

FIG. 6A is a perspective view illustrating a closed state of the biaxial hinge-type mobile communication terminal according to the embodiment of the present invention.

FIG. 6B is a perspective view illustrating a state where the folder cover is opened with respect to the first hinge axis in the biaxial hinge-type mobile communication terminal, and FIG. 6C is a perspective view illustrating a state where the folder cover is opened with respect to the second hinge axis in the biaxial hinge-type mobile communication terminal.

Referring to FIG. 6A, in the mobile communication terminal 100, as in the above description for FIGs. 1 to 4, the first hinge axis (A1) is directed in the horizontal direction of the main housing 10, the second hinge axis (A2) is directed in the vertical direction of the main housing 10, and the folder cover 20 faces the main housing 10 while closed with respect to the first hinge axis (A1) or the second hinge axis (A2).

It can be appreciated that the first and second magnets 42 and 44 corresponding to the first and second sensors 142 and 144 are arranged lengthwise in parallel with each other at the predetermined positions with respect to the folder cover 20 (for example, a lower position of the folder cover 20). The first and second sensors 142 and 144 and the first and second magnets 42 and 44 can be also arranged vertically in parallel with each other at left or right positions of the main housing 10 and the folder cover 20.

When the folder cover 20 is opened with respect to the first hinge axis (A1) directed in the horizontal direction of the main housing 10, and the first and second sensors 142 and 144 concurrently move away from the main housing 10 (that is, the first and second sensors 142 and 144 cannot sense the first and second magnets 42 and 44 provided at the folder cover 20), the sensor unit 140 outputs the first sense signal to the controller 130.

When the folder cover 20 is opened with respect to the second hinge axis (A2) directed in the vertical direction of the main housing 10 and adjacent to and in parallel with one side of the main housing 10 to allow any one of the first and second sensors 142 and 144 to first move away from the main housing 10 (that is, not to sense the corresponding magnet), the sensor unit 140 outputs the second sense signal to the controller 130. In other words, in FIG. 6C, the first sensor 142 first cannot sense the first magnet 42.

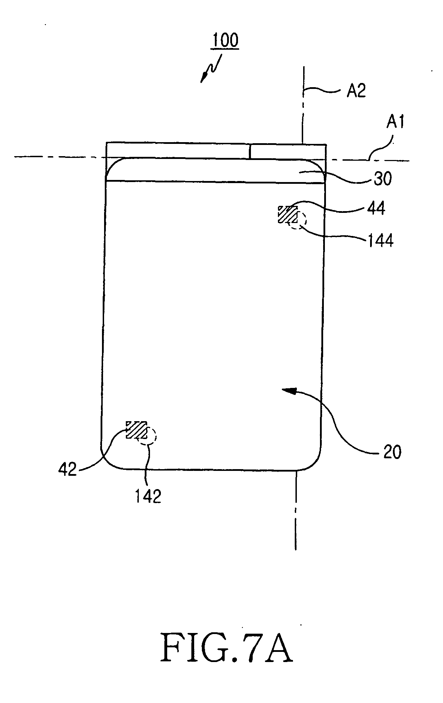

FIGs. 7A to 7C are exemplary views illustrating an operation of the sensor unit of the biaxial hinge-type mobile communication terminal according to another embodiment of the present invention.

FIG. 7A is a perspective view illustrating a closed state of the biaxial hinge-type mobile communication terminal according to another embodiment of the present invention.

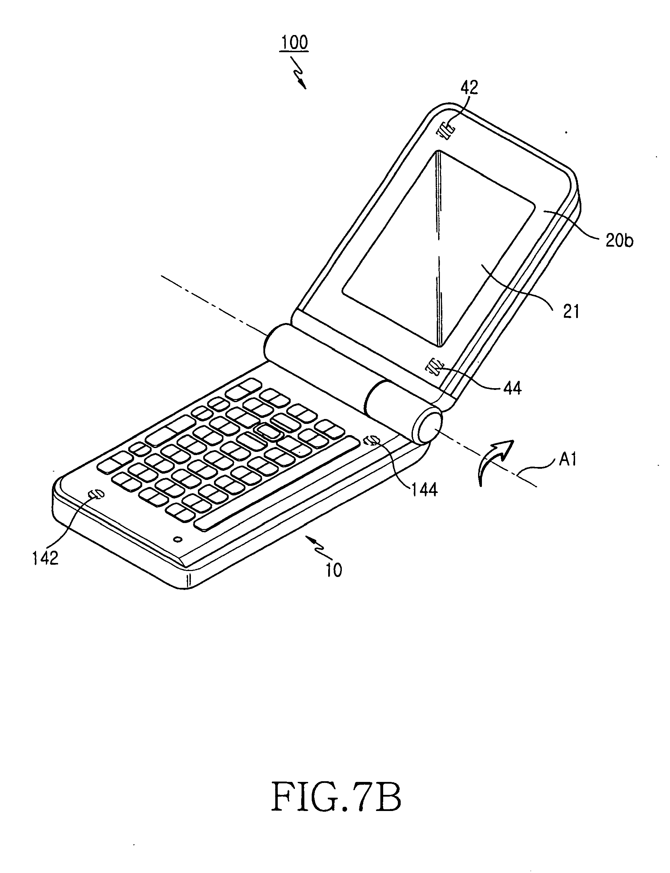

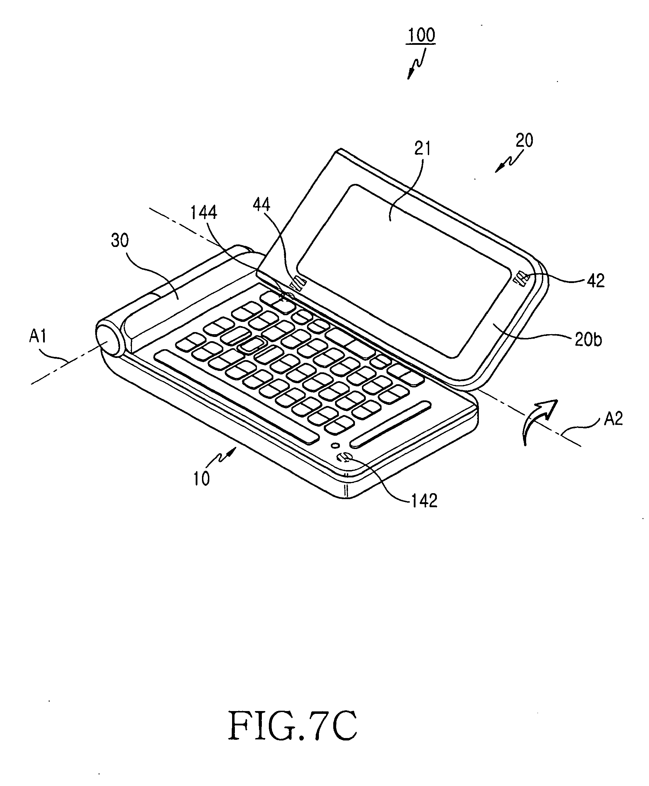

FIG. 7B is a perspective view illustrating a state where the folder cover is opened with respect to the first hinge axis in the biaxial hinge-type mobile communication terminal, and FIG. 7C is a perspective view illustrating a state where the folder cover is opened with respect to the second hinge axis in the biaxial hinge-type mobile communication terminal.

Referring to FIG. 7A, in the mobile communication terminal 100, as in the above description for FIGs. 1 to 4, the first hinge axis (A1) is directed in the horizontal direction of the main housing 10, the second hinge axis (A2) is directed in the vertical direction of the main housing 10, and the folder cover 20 faces the main housing 10 while opened and closed with respect to the first hinge axis (A1) or the second hinge axis (A2).

In an exemplary implementation of the present invention, a first sensor 142 is provided at a predetermined lower position of the main housing 10, and a second sensor 144 is provided at a predetermined upper position of the main housing 10. It should be noted that this is only one example of the placement of the sensors and magnets and does not limit the scope of the present invention.

The mobile communication terminal sensor unit 140 can be configured, for example, to continuously receive power to sense the position of the folder cover 20, even when the mobile communication terminal 100 is powered off. In the mobile communication terminal 100 shown in FIGs. 7A and 7B, when the folder cover 20 is opened with respect to the first hinge axis (A1) directed in the horizontal direction of the main housing 10, and the first and second sensors 142 and 144 sense the opening of the folder cover 20 (that is, when both the first and second sensors 142 and 144 cannot sense the first and second magnets 42 and 44, respectively, of the folder cover 20), the sensor unit 140 outputs the first sense signal to the controller 130.

In the mobile communication terminal 100 shown in FIG. 7A, when the folder cover 20 is opened with respect to the second hinge axis (A2) adjacent to and in parallel with one side of the main housing 10, and the first sensor 142 senses the opening of the folder cover 20 and the second sensor 144 cannot sense the opening of the folder cover 20, the sensor unit 140 outputs the second sense signal to the controller 130. This means that only the second sensor 144 senses the second magnet 44 of the folder cover 20.

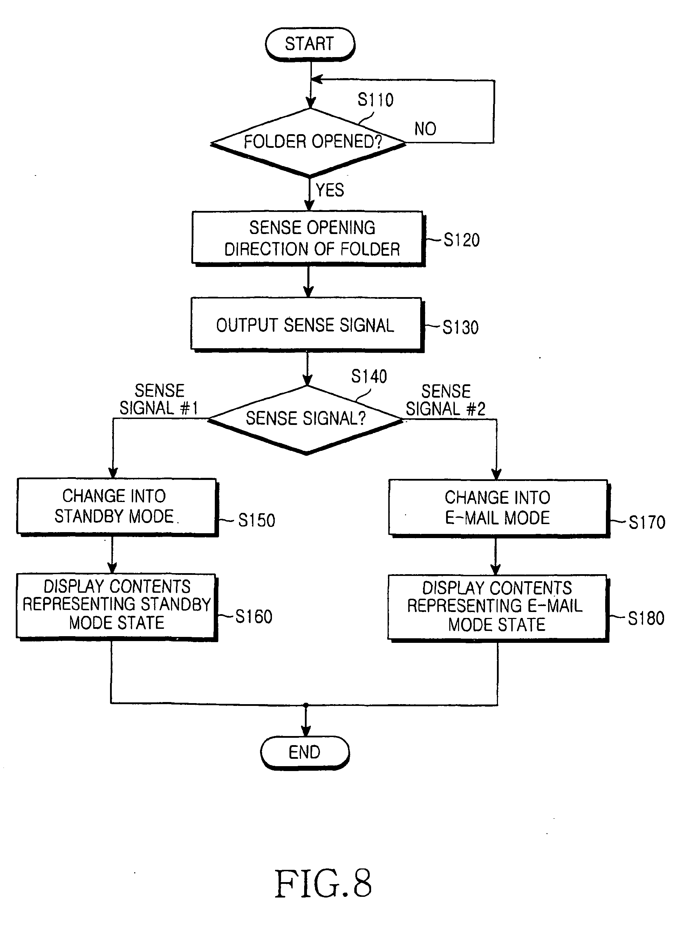

FIG. 8 is a flowchart illustrating a process of the biaxial hinge-type mobile communication terminal according to an embodiment of the present invention. In the following description of an exemplary implementation of the present invention, the mobile communication terminal 100 is in the standby mode with power "on" with the folder cover 20 in a closed position, which is with the folder cover 20 closest to the main housing 10.

A description of the process illustrated in FIG. 8 will be made with reference to

FIGs. 1 and 2 as follows.

The controller 130 checks whether or not the folder cover 20 is opened using the sensor unit 140 in the mobile communication terminal (S 110).

When the folder cover 20 is opened, the controller 130 controls the sensor unit 140 to sense the opening direction of the folder cover 20 (S120).

The sensor unit 140 senses the opening direction of the folder cover 20 under the control of the controller 130, and outputs a corresponding sense signal.

In other words, when the folder cover 20 is opened with respect to the first hinge axis (A1) directed in the horizontal direction of the main housing 10, and the first and second sensors 142 and 144 concurrently move away from the folder cover 20 (that is, the first and second sensors 142 and 144 cannot sense the first and second magnets 42 and 44 of the folder cover 20), the sensor unit 140 outputs the first sense signal to the controller 130.

When the folder cover 20 is opened with respect to the second hinge axis (A2) directed in the vertical direction of the main housing 10 and adjacent to and in parallel with one side of the main housing 10 to allow any one of the first and second sensors 142 and 144 to first move away from the folder cover 20 (that is, not to sense the corresponding magnet), the sensor unit 140 outputs the second sense signal to the controller 130.

Meantime, the sensor unit 140 can also output the first sense signal or the second sense signal in another embodiment of the present invention described with reference to FIGs. 7A to 7C. In other words, when the folder cover 20 is opened with respect to the first hinge axis (A1) directed in the horizontal direction of the main housing 10, and all of the first and second sensors 142 and 144 sense the opening of the folder cover 20 (that is, all of the first and second sensors 142 and 144 cannot sense the first and second magnets 42 and 44 of the folder cover 20), the sensor unit 140 outputs the first sense signal to the controller 130. When the folder cover 20 is opened with respect to the second hinge axis (A2) directed in the vertical direction of the main housing 10 and adjacent to and in parallel with one side of the main housing 10, and the first sensor 142 senses the opening of the folder cover 20 and the second sensor 144 cannot sense the opening of the folder cover 20, the sensor unit 140 outputs the second sense signal to the controller 130. When the sensor unit 140 outputs the sense signal, the controller 130 checks whether the outputted sense signal is the first sense signal or the second sense signal (S 140).

If it is determined that the outputted sense signal is the first sense signal, the controller 130 converts the operation mode of the mobile communication terminal 100 into the standby mode, which is , for example, the phone mode, for performing the phone call function (S150). The controller 130 can change luminous colors of the keys for performing the phone mode, among the keys of the key input unit 110, and also display only colors of the keys for performing the phone mode.

The controller 130 displays the contents representing a state of the standby mode for performing a phone mode function of the mobile communication terminal 100, on the display unit 120 (S160). The contents can be the date and time information representing the standby mode state of the mobile communication terminal 100. The menu icon for separately performing a hot-key function and the like can be displayed.

If it is determined in step S140 that the outputted sense signal is the second sense signal, the controller 130 changes the operation mode of the mobile communication terminal 100 into the e-mail mode for performing e-mail functions, such as transmitting, receiving and editing e-mail messages (S 170). The controller 130 converts the operation mode of the mobile communication terminal 100 into the e-mail mode for performing a menu input function such as the edition of the e-mail and transmitting and receiving the edited e-mail using the menu input function.

The controller 130 can change luminous colors of QWERTY keys among the keys of the key input unit 110, and also display only colors of the QWERTY keys.

When the mobile communication terminal 100 is changed to the e-mail mode, the controller 130 displays the contents representing the state of the e-mail mode on the display unit 120 (S 180). The controller 130 can control the display unit 120 to display an e-mail picture or various menu icons for performing a corresponding mode function such as an e-mail menu.

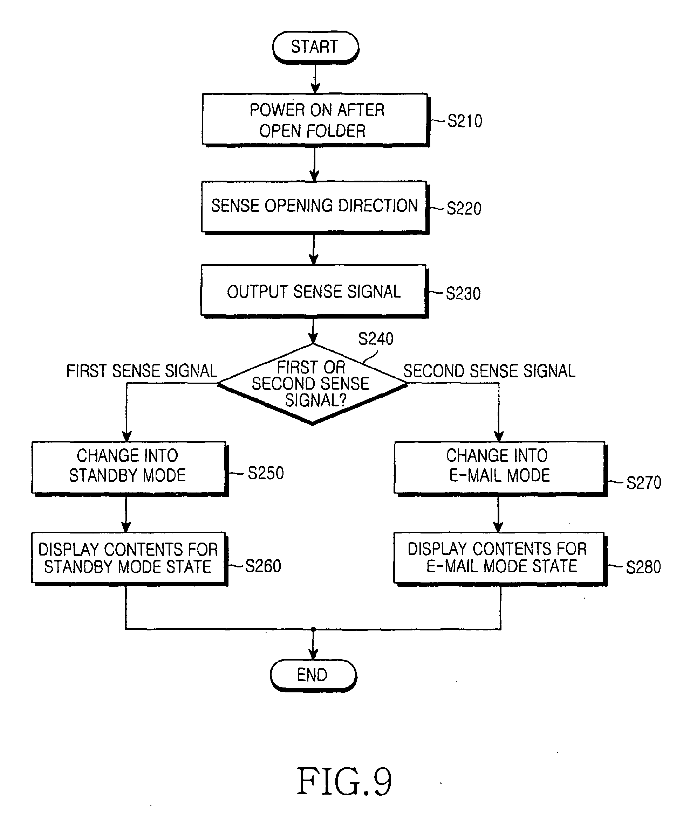

FIG. 9 is a flowchart illustrating an operation process of a biaxial hinge-type mobile communication terminal according to another embodiment of the present invention.
A description of FIG. 9 will be made with reference to FIGs. 1, 2 and 5 as follows.

When the folder cover 20 is opened and the mobile communication terminal 100 powers on (S210), the controller 130 checks the opening direction of the folder cover 20 using the sensor unit 140 (S220).

The sensor unit 140 senses the opening direction of the folder cover 20 under the control of the controller 130, and outputs a corresponding sense signal (S230). A detailed description of the step of outputting the sense signal from the sensor unit 140 based on the opening direction of the folder cover 20 has been made above and therefore, its description has not been repeated here.

When the sensor unit 140 outputs the sense signal, the controller 130 checks whether the outputted sense signal is the first sense signal or the second sense signal (S240).

If it is determined that the outputted sense signal is the first sense signal, the controller 130 converts the operation mode of the mobile communication terminal 100 into the standby mode (that is, phone mode) for performing the phone call function (S250). The controller 130 can change luminous colours of keys for performing the phone mode, among the keys of the key input unit 110, and also display only colours of the keys for performing the phone mode.

The controller 130 displays the contents representing a state of the standby mode for performing a phone mode function of the mobile communication terminal 100, on the display unit 120 (S260). The contents can be the date and time information representing the standby mode state of the mobile communication terminal 100. The menu icon for separately performing a hot-key function and the like can be displayed.

If it is determined in step S240 that the outputted sense signal is the second sense signal, the controller 130 changes the operation mode of the mobile communication terminal 100 into the e-mail mode for performing e-mail functions (S270). The controller 130 converts the operation mode of the mobile communication terminal 100 into the e-mail mode for performing a menu input function such as sending, receiving, creating and editing e-mail messages using the menu input function. The controller 130 can change the luminous colours of QWERTY keys from among keys of the key input unit 110, and also display the only colours that illuminate the QWERTY keys.

When the mobile communication terminal 100 is changed to the e-mail mode, the controller 130 displays the contents representing the state of the e-mail mode (S280). The controller 130 can control the display unit 120 to display an e-mail edition picture or various menu icons for performing a corresponding mode function such as an e-mail edition menu.

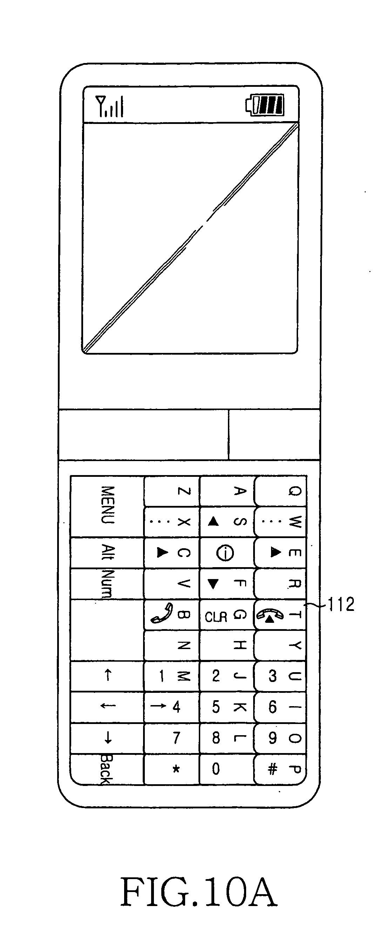

FIGs. 10A to 10D are example views illustrating an operation process of a biaxial hinge-type mobile communication terminal according to an embodiment of the present invention, so as to describe the operation process of FIG. 9.

With reference to FIGs. 3 and 4, FIG. 10A illustrates a state (that is, a vertical view state) where the folder cover 20 of the mobile communication terminal is opened with respect to the first hinge axis A1 as shown in FIG. 3. The mobile communication terminal is in a state of power-off, and has a keypad having a

QWERTY keyboard.

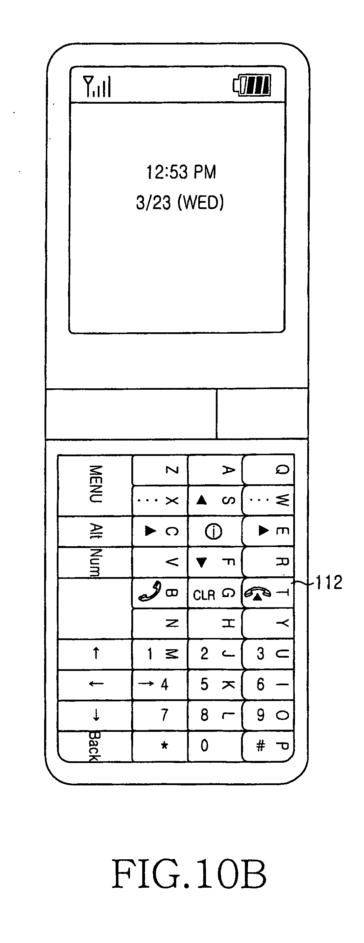

When the user presses a power key 112 and the mobile communication terminal powers on, the mobile communication terminal senses the opening direction of the folder cover 20 with respect to the first hinge axis as shown in FIG. 10B, to convert the operation mode into the standby mode (that is, phone mode) for performing a phone call function and display the contents (for example, time and date information) representing a state of the standby mode for performing the phone mode function.

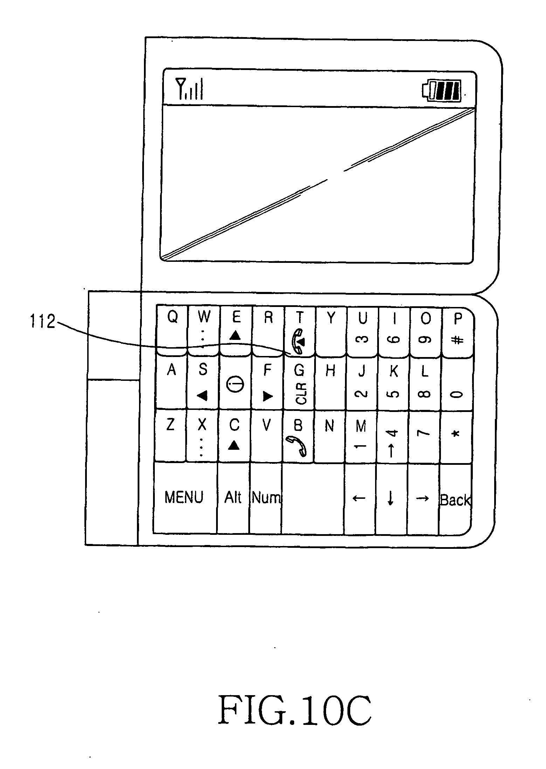

FIG. 10C illustrates a state (that is, a horizontal view state) where the folder cover is opened with respect to the second hinge axis as shown in FIG. 4. The mobile communication tenninal is in the state of power-off, and has the keypad having the QWERTY keyboard.

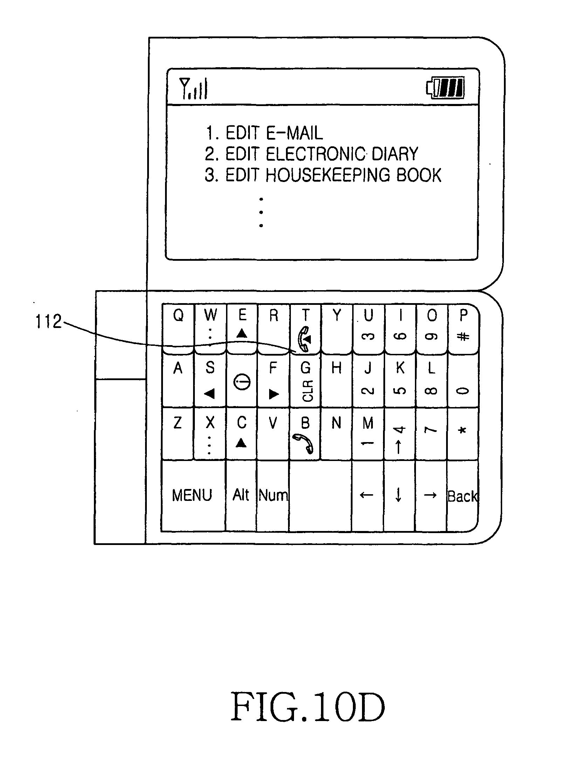

When the user presses a power key 112 and the mobile communication terminal powers on, the mobile communication terminal senses the opening direction of the folder cover 20 with respect to the second hinge axis as shown in FIG. 10D, to convert the operation mode into the e-mail mode. In other words, the mobile communication terminal converts the operation mode into the e-mail mode for performing the menu input function such as viewing an edition of the e-mail using the menu input function, and displays the contents representing the e-mail mode.
In FIG. 10D, as an example of the contents, a menu such as "1. Edit e-mail", "2. Edit electronic diary", and "3. Edit housekeeping book" is displayed.

As described above, in the mobile communication terminal according to an embodiment of the present invention, the mode change can be quickly performed, depending on the opening direction of the folder, between the general phone mode for performing the phone call function and the e-mail mode for editing the e-mail and transmitting and receiving the edited e-mail.

Further, when the mobile communication terminal powers on, it can access a user's desired mode depending on the opening direction of the folder cover and therefore, greatly increase a user convenience.
While the invention has been shown and described with reference to a certain preferred embodiment thereof, it will be understood by those skilled in the art that various changes in form and details may be made therein without departing from the and scope of the invention as defined by the appended claims.

## Claims

1. A mobile communication terminal comprising:
a main housing (10) ;
a folder cover (20) movable with respect to the main housing (10) in a first and second opening directions with respect to first and second hinge axes (A1, A2), respectively;
a sensor unit (140) for outputting a sense signal based on an opening direction of the folder cover (20); and
a controller for changing an operation mode of the mobile communication terminal based on the sense signal **characterized in that**
the sensor unit (140) comprises first and second sensors (142, 144) arranged
a) on a parallel to either the first or second hinge axis (A1,A2) near an edge of the main housing (10) or folder cover (20), or
b) at predetermined lower and upper positions of the main housing (10) or folder cover (20), wherein each sensor (142, 144) is arranged near a corner diagonally opposite the corner near which the other sensor (142,144) is arranged,
and on the side of the main housing (10) or folder cover (20) facing the other when the mobile communication terminal (100) is closed,
and further comprises first and second magnets (42, 44) arranged at corresponding positions on the side of one of the main housing (10) or folder cover (20) which faces the sensors (142, 144) when the mobile communication terminal (100) is closed.

2. The terminal of claim 1 further comprises a built-in QWERTY keyboard used as a computer keyboard.

3. The terminal of claim 1, further comprising a display unit for displaying data representing a state of the operation mode.

4. The terminal of claim 1, further comprising a key input unit for changing luminous colours of keys under the control of the controller based on the operation mode.

5. The terminal of claim 1, wherein when the first and second sensors are adapted to sense that the folder cover (20) is opened with respect to the first hinge axis (A1) in the first opening direction, the sensor unit outputs a first sense signal to the controller.

6. The terminal of claim 1, wherein the first hinge axis (A1) is in a horizontal direction.

7. The terminal of claim 5, wherein when the sensor unit outputs the first sense signal, the controller is adapted to change the operation mode to a phone mode.

8. The terminal of claim 7, further comprising a display unit for displaying data representing a state of the operation mode, wherein when the sensor unit outputs the first sense signal, the controller is adapted to display data representing a standby mode state on the display unit.

9. The terminal of claim 7, further comprising a key input unit for changing luminous colors of keys under the control of the controller based on the operation mode wherein when the sensor unit outputs the first sense signal, the controller changes luminous colors of keys for performing a phone mode function of the key input unit.

10. The terminal of claim 9, wherein when the sensor unit outputs the first sense signal, the controller is adapted to display only colors of the keys for performing the phone mode function.

11. The terminal of claim 7, wherein when at least one of the first and second sensors first senses that the folder cover (20) is opened with respect to the second hinge axis (A2) in the second opening direction, the sensor unit is adapted to output a second sense signal.

12. The terminal of claim 11, wherein the second direction is in a vertical direction of the main housing (10) and adjacent to and in parallel with one side of the main housing (10.

13. The terminal of claim 11, comprising a display unit for displaying data representing a state of the operation mode wherein when the sensor unit outputs the second sense signal, the controller is adapted to change the operation mode into an e-mail mode.

14. The terminal of claim 12, wherein the e-mail mode comprises at least one of creating, editing, sending and receiving e-mail (electronic mail) messages.

15. The terminal of claim 13, wherein when the sensor unit outputs the second sense signal, the controller is adapted to display data representing a state of the e-mail mode for creating, editing, sending and receiving e-mail messages, on the display unit.

16. The terminal of claim 13, further comprising a key input unit for changing luminous colours of keys under the control of the controller based on the operation mode, wherein when the sensor unit outputs the second sense signal, the controller is adapted to change a luminous colour of a QWERTY key from among the keys of the key input unit.

17. The terminal of claim 16, wherein when the sensor unit outputs the second sense signal, the controller is adapted to display only a colour of the QWERTY key.

18. The terminal of claim 1, wherein when the first and second sensors sense that the folder cover (20) is opened with respect to the first hinge axis (A1) in the first opening direction, the sensor unit is adapted to output a first sense signal to the controller.

19. The terminal of claim 18, wherein when the sensor unit outputs the first sense signal, the controller is adapted to change the operation mode to a phone mode.

20. The terminal of claim 19, further comprising a display unit for displaying data representing a state of the operation mode, wherein when the sensor unit outputs the first sense signal, the controller is adapted to display data representing a standby mode state on the display unit.

21. The terminal of claim 19, further comprising a key input unit for changing luminous colours of keys under the control of the controller based on the operation mode wherein when the sensor unit outputs the first sense signal, the controller is adapted to change luminous colours of keys for performing a phone mode function of the key input unit.

22. The terminal of claim 21, wherein when the sensor unit outputs the first sense signal, the controller is adapted to display only colours of the keys for performing the phone mode function.

23. The terminal of claim 1, wherein when at least one of the first and second sensors first senses that the folder cover (20) is opened with respect to the second hinge axis (A2) in the second opening direction, the sensor unit is adapted to output a second sense signal.

24. The terminal of claim 23, wherein the second direction is in a vertical direction of the main housing (10) and adjacent to and in parallel with one side of the main housing (10).

25. The terminal of claim 23, comprising a display unit for displaying data representing a state of the operation mode wherein when the sensor unit outputs the second sense signal, the controller is adapted to change the operation mode into an e-mail mode.

26. The terminal of claim 13, further comprising a display unit for displaying data representing a state of the operation mode, wherein the e-mail mode comprises at least one of creating, editing, sending and receiving e-mail messages.

27. The terminal of claim 25, comprising a display unit for displaying data representing a state of the operation mode wherein when the sensor unit outputs the second sense signal, the controller is adapted to change the operation mode into an e-mail mode.

28. The terminal of claim 15, further comprising a key input unit for changing luminous colours of keys under the control of the controller based on the operation mode, wherein when the sensor unit outputs the second sense signal, the controller is adapted to change a luminous colour of a QWERTY key from among the keys of the key input unit.

29. The terminal of claim 17, wherein when the sensor unit outputs the second sense signal, the controller is adapted to display only a colour of the QWERTY key.

30. A method for changing an operation mode, the method being performed in the mobile communication terminal (100) according to claim 1, the method comprising the steps of:
outputting a sense signal based on an opening direction of the folder; and
changing the operation mode based on the outputted sense signal,
**characterized in that** the step of outputting the sense signal comprises the steps of,
when the folder cover (20) is opened with respect to the first hinge axis (A1):
sensing the opening of the folder cover (20) in the first opening direction using the first and second sensors (142, 144); and
generating a first sense signal;
when the folder cover (20) in the second opening direction is opened with respect to the second hinge axis (A2),
sensing the opening of the folder cover (20) using the first and second sensors (142,144); and
outputting a second sense signal.

31. The method of claim 30, wherein the step of changing the operation mode comprises the step of, when the first sense signal is output, changing the operation mode into a phone mode for performing at least a phone call function.

32. The method of claim 31, further comprising the step of displaying contents representing a standby mode state on a display window when the first sense signal is output.

33. The method of claim 31, further comprising the step of changing a luminous color of at least one key for performing a phone mode function of a keypad of the mobile communication terminal when the first sense signal is output.

34. The method of claim 33, wherein when the first sense signal is output, only the color of the at least one key for performing the phone mode function of the keypad is displayed.

35. The method of claim 30, wherein the step of changing the operation mode comprises the step of when the second sense signal is output, changing the operation mode into an e-mail mode.

36. The method of claim 35, further comprising the step of changing a luminous color of at least one QWERTY key of a keypad of the mobile communication when the second sense signal is outputted.

37. The method of claim 36, wherein when the second sense signal is outputted, only the color of the QWERTY key among the keys of the keypad is displayed.

38. The method of claim 35, further comprising the step of displaying data representing a state of the e-mail mode for performing e-mail functions on a display window when the second sense signal is output.

39. The method of claim 38, wherein the e-mail mode comprises at least one of editing an e-mail message, creating, sending and receiving the edited an e-mail message.

40. The method of claim 30, wherein the second opening direction comprises a vertical direction parallel to a side of the main housing (10).

41. The method of claim 30, wherein the mobile communication terminal further comprises a built-in QWERTY keyboard, the method further comprising the steps of:
sensing an opening direction of the folder cover (20);

42. The method of claim 41, wherein the step of outputting a sense signal comprises outputting a first sense signal when the mobile communication terminal powers on and the folder cover (20) is opened with respect to the first hinge axis (A1) in the first opening direction.

43. The method of claim 41, wherein the step of changing the operation mode comprises the step of changing the operation mode into a phone mode when the first sense signal is output.

44. The method of claim 42, further comprising the step of displaying data representing a standby mode state on a display window of the mobile communication terminal when the first sense signal is output.

45. The method of claim 42, further comprising the step of changing luminous color of at least one key for performing a phone mode function, when the first sense signal is outputted.

46. The method of claim 45, wherein the method further comprises the step of, displaying only the colour of the at least one key for performing the phone mode function, when the first sense signal is output.

47. The method of claim 41, where the step of outputting the sense signal comprises the step of outputting a second sense signal when the mobile communication terminal powers on and the folder cover (20) is opened with respect to the second hinge axis (A2) in the second opening direction.

48. The method of claim 47, wherein the step of changing the operation mode comprises the step of changing the operation mode into an e-mail mode when the second sense signal is output.

49. The method of claim 48, wherein the e-mail mode comprises at least on of creating, editing, sending and receiving e-mail messages.

50. The method of claim 48, further comprising the step of changing a luminous colour of a QWERTY key of a keypad of the mobile communication terminal when the second sense signal is outputted.

51. The method of claim 50, wherein when the second sense signal is outputted, only a colour of the QWERTY key is displayed.

52. The method of claim 48, further comprising the step of displaying contents representing a state of the e-mail mode on a display window of the mobile communication terminal, when the second sense signal is outputted.

53. The method of claim 52, wherein when the folder cover (20) is opened and the mobile communication terminal powers on, the opening direction of the folder cover (20) is sensed.

54. The method of claim 30, wherein outputting a sense signal comprises:
a) outputting a first sense signal when the first and second sensors concurrently cannot sense the first and second magnets, respectively; and
outputting a second sense signal when the first or second sensor cannot sense the corresponding magnet; or
b) outputting a first sense signal when the first and second sensors cannot sense the first and second magnets, respectively; and
outputting a second sense signal when one of the sensors cannot sense the corresponding magnet and when the other sensor senses the corresponding magnet.

## Patentansprüche

1. Tragbares Kommunikationsgerät, umfassend:
ein Hauptgehäuse (10);
einen klappbaren Deckel (20), der in Bezug auf das Hauptgehäuse (10) in ersten und zweiten Öffnungsrichtungen in Bezug auf erste bzw. zweite Gelenkachsen (A1, A2) bewegt werden kann;
eine Sensoreinheit (140) zum Ausgeben eines Erfassungssignals basierend auf einer Öffnungsrichtung des klappbaren Deckels (20); und
eine Steuerung zum Umschalten eines Arbeitsmodus des tragbaren Kommunikationsgeräts basierend auf dem Erfassungssignal,
**dadurch gekennzeichnet, dass**
die Sensoreinheit (140) erste und zweite Sensoren (142, 144) umfasst, die angeordnet sind
a) auf einer Parallelen zu entweder der ersten oder zweiten Gelenkachse (A1, A2) in der Nähe einer Kante des Hauptgehäuses (10) oder des klappbaren Deckels (20) oder
b) an vorbestimmten unteren und oberen Positionen des Hauptgehäuses (10) oder des klappbaren Deckels (20), wobei jeder Sensor (142, 144) in der Nähe einer Ecke diagonal gegenüber der Ecke angeordnet ist, in deren Nähe der andere Sensor (142, 144) angeordnet ist,
und auf der Seite des Hauptgehäuses (10) oder des klappbaren Deckels (20), die der anderen gegenüber liegt, wenn das tragbare Kommunikationsendgerät (100) geschlossen ist,
und ferner erste und zweite Magneten (42, 44) umfasst, die an entsprechenden Positionen auf der Seite von einem des Hauptgehäuses (10) oder des klappbaren Deckels (20) angeordnet sind, welche den Sensoren (142, 144) gegenüberliegt, wenn das tragbare Kommunikationsgerät (100) geschlossen ist.

2. Gerät nach Anspruch 1, das ferner eine integrierte QWERTY-Tastatur umfasst, die als eine Computer-Tastatur verwendet wird.

3. Gerät nach Anspruch 1, ferner umfassend eine Anzeigeeinheit zum Anzeigen von Daten, die einen Zustand des Arbeitsmodus darstellen.

4. Gerät nach Anspruch 1, ferner umfassend eine Tasteneingabeeinheit zum Ändern von Leuchtfarben von Tasten unter der Kontrolle der Steuerung basierend auf dem Arbeitsmodus.

5. Gerät nach Anspruch 1, wobei, wenn die ersten und zweiten Sensoren so ausgelegt sind, dass sie erfassen, dass der klappbare Deckel (20) in Bezug auf die erste Gelenkachse (A1) in der ersten Öffnungsrichtung geöffnet ist, die Sensoreinheit ein erstes Erfassungssignal an die Steuerung ausgibt.

6. Gerät nach Anspruch 1, wobei die erste Gelenkachse (A1) in einer horizontalen Richtung ist.

7. Gerät nach Anspruch 5, wobei die Steuerung so ausgelegt ist, dass sie, wenn die Sensoreinheit das erste Erfassungssignal ausgibt, den Arbeitsmodus in einen Telefonmodus umschaltet.

8. Gerät nach Anspruch 7, ferner umfassend eine Anzeigeeinheit zum Anzeigen von Daten, die einen Zustand des Arbeitsmodus darstellen, wobei die Steuerung so ausgelegt ist, dass sie, wenn die Sensoreinheit das erste Erfassungssignal ausgibt, Daten auf der Anzeigeeinheit anzeigt, die einen Bereitschaftsmoduszustand darstellen.

9. Gerät nach Anspruch 7, ferner umfassend eine Tasteneingabeeinheit zum Ändern von Leuchtfarben von Tasten unter der Kontrolle der Steuerung basierend auf dem Arbeitsmodus, wobei, wenn die Sensoreinheit das erste Erfassungssignal ausgibt, die Steuerung Leuchtfarben von Tasten zum Ausführen einer Telefonmodusfunktion der Tasteneingabeeinheit ändert.

10. Gerät nach Anspruch 9, wobei die Steuerung so ausgelegt ist, dass sie, wenn die Sensoreinheit das erste Erfassungssignal ausgibt, nur Farben der Tasten zum Ausführen der Telefonmodusfunktion anzeigt.

11. Gerät nach Anspruch 7, wobei die Sensoreinheit so ausgelegt ist, dass sie, wenn mindestens einer der ersten und zweiten Sensoren zuerst erfasst, dass der klappbare Deckel (20) in Bezug auf die zweite Gelenkachse (A2) in der zweiten Öffnungsrichtung geöffnet ist, ein zweites Erfassungssignal ausgibt.

12. Gerät nach Anspruch 11, wobei die zweite Richtung in einer vertikalen Richtung des Hauptgehäuses (10) und benachbart und parallel zu einer Seite des Hauptgehäuses (10) ist.

13. Gerät nach Anspruch 11, umfassend eine Anzeigeeinheit zum Anzeigen von Daten, die einen Zustand des Arbeitsmodus darstellen, wobei die Steuerung so ausgelegt ist, dass sie, wenn die Sensoreinheit das zweite Erfassungssignal ausgibt, den Arbeitsmodus in einen E-Mail-Modus umschaltet.

14. Gerät nach Anspruch 12, wobei der E-Mail-Modus mindestens eines von einem Erstellen, Bearbeiten, Senden und Empfangen von E-Mail (elektronischen Post)-Nachrichten umfasst.

15. Gerät nach Anspruch 13, wobei die Steuerung so ausgelegt ist, dass sie, wenn die Sensoreinheit das zweite Erfassungssignal ausgibt, Daten auf der Anzeigeeinheit anzeigt, die einen Zustand des E-Mail-Modus zum Erstellen, Bearbeiten, Senden und Empfangen von E-Mail-Nachrichten darstellen.

16. Gerät nach Anspruch 13, ferner umfassend eine Tasteneingabeeinheit zum Ändern von Leuchtfarben von Tasten unter der Kontrolle der Steuerung basierend auf dem Arbeitsmodus, wobei die Steuerung so ausgelegt ist, dass sie, wenn die Sensoreinheit das zweite Erfassungssignal ausgibt, eine Leuchtfarbe einer QWERTY-Taste unter den Tasten der Tasteneingabeeinheit ändert.

17. Gerät nach Anspruch 16, wobei die Steuerung so ausgelegt ist, dass sie, wenn die Sensoreinheit das zweite Erfassungssignal ausgibt, nur eine Farbe der QWERTY-Taste anzeigt.

18. Gerät nach Anspruch 1, wobei die Sensoreinheit so ausgelegt ist, dass sie, wenn die ersten und zweiten Sensoren erfassen, dass der klappbare Deckel (20) in Bezug auf die erste Gelenkachse (A1) in der ersten Öffnungsrichtung geöffnet ist, ein erstes Erfassungssignal an die Steuerung ausgibt.

19. Gerät nach Anspruch 18, wobei die Steuerung so ausgelegt ist, dass sie, wenn die Sensoreinheit das erste Erfassungssignal ausgibt, den Arbeitsmodus in einen Telefonmodus umschaltet.

20. Gerät nach Anspruch 19, ferner umfassend eine Anzeigeeinheit zum Anzeigen von Daten, die einen Zustand des Arbeitsmodus darstellen, wobei die Steuerung so ausgelegt ist, dass sie, wenn die Sensoreinheit das erste Erfassungssignal ausgibt, Daten auf der Anzeigeeinheit anzeigt, die einen Bereitschaftsmoduszustand darstellen.

21. Gerät nach Anspruch 19, ferner umfassend eine Tasteneingabeeinheit zum Ändern von Leuchtfarben von Tasten unter der Kontrolle der Steuerung basierend auf dem Arbeitsmodus, wobei die Steuerung so ausgelegt ist, dass sie, wenn die Sensoreinheit das erste Erfassungssignal ausgibt, Leuchtfarben von Tasten zum Ausführen einer Telefonmodusfunktion der Tasteneingabeeinheit ändert.

22. Gerät nach Anspruch 21, wobei die Steuerung so ausgelegt ist, dass sie, wenn die Sensoreinheit das erste Erfassungssignal ausgibt, nur Farben der Tasten zum Ausführen der Telefonmodusfunktion anzeigt.

23. Gerät nach Anspruch 1, wobei die Sensoreinheit so ausgelegt ist, dass sie, wenn mindestens einer der ersten und zweiten Sensoren zuerst erfasst, dass der klappbare Deckel (20) in Bezug auf die zweite Gelenkachse (A2) in der zweiten Öffnungsrichtung geöffnet ist, ein zweites Erfassungssignal ausgibt.

24. Gerät nach Anspruch 23, wobei die zweite Richtung in einer vertikalen Richtung des Hauptgehäuses (10) und benachbart und parallel zu einer Seite des Hauptgehäuses (10) ist.

25. Gerät nach Anspruch 23, umfassend eine Anzeigeeinheit zum Anzeigen von Daten, die einen Zustand des Arbeitsmodus darstellen, wobei die Steuerung so ausgelegt ist, dass sie, wenn die Sensoreinheit das zweite Erfassungssignal ausgibt, den Arbeitsmodus in einen E-Mail-Modus umschaltet.

26. Gerät nach Anspruch 13, ferner umfassend eine Anzeigeeinheit zum Anzeigen von Daten, die einen Zustand des Arbeitsmodus darstellen, wobei der E-Mail-Modus mindestens eines von einem Erstellen, Bearbeiten, Senden und Empfangen von E-Mail-Nachrichten umfasst.

27. Gerät nach Anspruch 25, umfassend eine Anzeigeeinheit zum Anzeigen von Daten, die einen Zustand des Arbeitsmodus darstellen, wobei die Steuerung so ausgelegt ist, dass sie, wenn die Sensoreinheit das zweite Erfassungssignal ausgibt, den Arbeitsmodus in einen E-Mail-Modus umschaltet.

28. Gerät nach Anspruch 15, ferner umfassend eine Tasteneingabeeinheit zum Ändern von Leuchtfarben von Tasten unter der Kontrolle der Steuerung basierend auf dem Arbeitsmodus, wobei die Steuerung so ausgelegt ist, dass sie, wenn die Sensoreinheit das zweite Erfassungssignal ausgibt, eine Leuchtfarbe einer QWERTY-Taste unter den Tasten der Tasteneingabeeinheit ändert.

29. Gerät nach Anspruch 17, wobei die Steuerung so ausgelegt ist, dass sie, wenn die Sensoreinheit das zweite Erfassungssignal ausgibt, nur eine Farbe der QWERTY-Taste anzeigt.

30. Verfahren zum Umschalten eines Arbeitsmodus, wobei das Verfahren im tragbaren Kommunikationsgerät (100) nach Anspruch 1 ausgeführt wird, und das Verfahren die folgenden Schritte umfasst:
Ausgeben eines Erfassungssignals basierend auf einer Öffnungsrichtung des klappbaren Deckel; und
Umschalten des Arbeitsmodus basierend auf dem ausgegebenen Erfassungssignal,
**dadurch gekennzeichnet, dass** der Schritt des Ausgebens des Erfassungssignals die folgenden Schritte umfasst:
wenn der klappbare Deckel (20) in Bezug auf die erste Gelenkachse (A1) geöffnet wird:
Erfassen der Öffnung des klappbaren Deckels (20) in der ersten Öffnungsrichtung unter Verwendung der ersten und zweiten Sensoren (142, 144); und
Erzeugen eines ersten Erfassungssignals;
wenn der klappbare Deckel (20) in der zweiten Öffnungsrichtung in Bezug auf die zweite Gelenkachse (A2) geöffnet wird:
Erfassen der Öffnung des klappbaren Deckels (20) unter Verwendung der ersten und zweiten Sensoren (142, 144); und
Ausgeben eines zweiten Erfassungssignals.

31. Verfahren nach Anspruch 30, wobei der Schritt des Umschaltens des Arbeitsmodus den Schritt des Umschaltens des Arbeitsmodus in einen Telefonmodus zum Ausführen mindestens einer Telefonanruffunktion umfasst, wenn das erste Erfassungssignal ausgegeben wird.

32. Verfahren nach Anspruch 31, ferner umfassend den Schritt des Anzeigens von Inhalten, die einen Bereitschaftsmoduszustand darstellen, auf einem Anzeigefenster, wenn das erste Erfassungssignal ausgegeben wird.

33. Verfahren nach Anspruch 31, ferner umfassend den Schritt des Änderns einer Leuchtfarbe mindestens einer Taste zum Ausführen einer Telefonmodusfunktion eines Tastenblocks des tragbaren Kommunikationsgeräts, wenn das erste Erfassungssignal ausgegeben wird.

34. Verfahren nach Anspruch 33, wobei, wenn das erste Erfassungssignal ausgeben wird, nur die Farbe der mindestens einen Taste zum Ausführen der Telefonmodusfunktion des Tastenblocks angezeigt wird.

35. Verfahren nach Anspruch 30, wobei der Schritt des Umschaltens des Arbeitsmodus den Schritt des Umschaltens des Arbeitsmodus in einen E-Mail-Modus umfasst, wenn das zweite Erfassungssignal ausgegeben wird.

36. Verfahren nach Anspruch 35, ferner umfassend den Schritt des Änderns einer Leuchtfarbe mindestens einer QWERTY-Taste eines Tastenblocks des tragbaren Kommunikationsgeräts, wenn das zweite Erfassungssignal ausgegeben wird.

37. Verfahren nach Anspruch 36, wobei, wenn das zweite Erfassungssignal ausgeben wird, nur die Farbe der QWERTY-Taste unter den Tasten des Tastenblocks angezeigt wird.

38. Verfahren nach Anspruch 35, ferner umfassend den Schritt des Anzeigens von Daten, die einen Zustand des E-Mail-Modus darstellen, zum Ausführen von E-Mail-Funktionen auf einem Anzeigefenster, wenn das zweite Erfassungssignal ausgegeben wird.

39. Verfahren nach Anspruch 38, wobei der E-Mail-Modus mindestens eines von einem Bearbeiten einer E-Mail-Nachricht, Erstellen, Senden und Empfangen der bearbeiteten E-Mail-Nachricht umfasst.

40. Verfahren nach Anspruch 30, wobei die zweite Öffnungsrichtung eine vertikale Richtung parallel zu einer Seite des Hauptgehäuses (10) umfasst.

41. Verfahren nach Anspruch 30, wobei das tragbare Kommunikationsgerät eine integrierte QWERTY-Tastatur umfasst, und das Verfahren ferner den folgenden Schritt umfasst:
Erfassen einer Öffnungsrichtung des klappbaren Deckels (20).

42. Verfahren nach Anspruch 41, wobei der Schritt des Ausgebens eines Erfassungssignals ein Ausgeben eines ersten Erfassungssignals umfasst, wenn das tragbare Kommunikationsgerät eingeschaltet wird und der klappbare Deckel (20) in Bezug auf die erste Gelenkachse (A1) in der ersten Öffnungsrichtung geöffnet wird.

43. Verfahren nach Anspruch 41, wobei der Schritt des Umschaltens des Arbeitsmodus den Schritt des Umschaltens des Arbeitsmodus in einen Telefonmodus umfasst, wenn das erste Erfassungssignal ausgegeben wird.

44. Verfahren nach Anspruch 42, ferner umfassend den Schritt des Anzeigens von Daten, die einen Bereitschaftsmoduszustand darstellen, auf einem Anzeigefenster des tragbaren Kommunikationsgeräts, wenn das erste Erfassungssignal ausgegeben wird.

45. Verfahren nach Anspruch 42, ferner umfassend den Schritt des Änderns einer Leuchtfarbe mindestens einer Taste zum Ausführen einer Telefonmodusfunktion, wenn das erste Erfassungssignal ausgegeben wird.

46. Verfahren nach Anspruch 45, wobei das Verfahren ferner den Schritt des Änderns nur der Farbe der mindestens einen Taste zum Ausführen der Telefonmodusfunktion umfasst, wenn das erste Erfassungssignal ausgegeben wird.

47. Verfahren nach Anspruch 41, wobei der Schritt des Ausgebens des Erfassungssignals den Schritt des Ausgebens eines zweiten Erfassungssignals umfasst, wenn das tragbare Kommunikationsgerät eingeschaltet wird und der klappbare Deckel (20) in Bezug auf die zweite Gelenkachse (A2) in der zweiten Öffnungsrichtung geöffnet wird.

48. Verfahren nach Anspruch 47, wobei der Schritt des Umschaltens des Arbeitsmodus den Schritt des Umschaltens des Arbeitsmodus in einen E-Mail-Modus umfasst, wenn das zweite Erfassungssignal ausgegeben wird.

49. Verfahren nach Anspruch 48, wobei der E-Mail-Modus mindestens eines von einem Erstellen, Bearbeiten, Senden und Empfangen von E-Mail-Nachrichten umfasst.

50. Verfahren nach Anspruch 48, ferner umfassend den Schritt des Änderns einer Leuchtfarbe einer QWERTY-Taste eines Tastenblocks des tragbaren Kommunikationsgeräts, wenn das zweite Erfassungssignal ausgegeben wird.

51. Verfahren nach Anspruch 50, wobei, wenn das zweite Erfassungssignal ausgeben wird, nur eine Farbe der QWERTY-Taste angezeigt wird.

52. Verfahren nach Anspruch 48, ferner umfassend den Schritt des Anzeigens von Inhalten, die einen Zustand des E-Mail-Modus darstellen, auf einem Anzeigefenster des tragbaren Kommunikationsgeräts, wenn das zweite Erfassungssignal ausgegeben wird.

53. Verfahren nach Anspruch 52, wobei, wenn der klappbare Deckel (20) geöffnet und das tragbare Kommunikationsgerät eingeschaltet wird, die Öffnungsrichtung des klappbaren Deckels (20) erfasst wird.

54. Verfahren nach Anspruch 18, wobei das Ausgeben eines Erfassungssignals umfasst:
a) Ausgeben eines ersten Erfassungssignals, wenn die ersten und zweiten Sensoren die ersten bzw. zweiten Magneten nicht gleichzeitig erfassen können; und
Ausgeben eines zweiten Erfassungssignals, wenn der erste oder der zweite Sensor den entsprechenden Magneten nicht erfassen kann; oder
b) Ausgeben eines ersten Erfassungssignals, wenn die ersten und zweiten Sensoren die ersten bzw. zweiten Magneten nicht erfassen können; und
Ausgeben eines zweiten Erfassungssignals, wenn einer der Sensoren den entsprechenden Magneten nicht erfassen kann und wenn der andere Sensor den entsprechenden Magneten erfasst.

## Revendications

1. Terminal de communication portatif comprenant :
un boîtier principal (10),
un couvercle pliant (20) mobile par rapport au boîtier principal (10) dans une première et une seconde directions d'ouverture par rapport à des premier et second axes de charnière (A1, A2) respectivement ;
une unité de détection (140) pour émettre un signal de détection basé sur une direction d'ouverture du couvercle pliant (20) ; et
un contrôleur pour modifier un mode opératoire du terminal de communication portatif sur la base du signal de détection,
**caractérisé en ce que**
l'unité de détection (140) comprend des premier et second détecteurs (142, 144) disposés
a) sur une parallèle au premier ou au second axe de charnière (A1, A2) près d'un bord du boîtier principal (10) ou du couvercle pliant (20), ou
b) dans des positions inférieure et supérieure prédéterminées du boîtier principal (10) ou du couvercle pliant (20), chaque détecteur (142, 144) étant disposé près d'un angle diagonalement opposé à l'angle près duquel l'autre détecteur (142, 144) est disposé,
et du côté du boîtier principal (10) ou du couvercle pliant (20) faisant face à l'autre lorsque le terminal de communication portatif (100) est fermé,
et **en ce qu'**elle comprend par ailleurs des premier et second aimants (42, 44) disposés dans des positions correspondantes du côté de l'un parmi le boîtier principal (10) ou le couvercle pliant (20) faisant face aux détecteurs (142, 144) lorsque le terminal de communication portatif (100) est fermé.

2. Terminal selon la revendication 1, comprenant par ailleurs un clavier QWERTY intégré utilisé en tant que clavier d'ordinateur.

3. Terminal selon la revendication 1, comprenant une unité d'affichage pour afficher des données représentant un état du mode opératoire.

4. Terminal selon la revendication 1, comprenant par ailleurs une unité d'entrée à touches pour changer les couleurs lumineuses de touches sous le contrôle du contrôleur sur la base du mode opératoire.

5. Terminal selon la revendication 1, dans lequel, lorsque les premier et second détecteurs sont adaptés pour détecter que le couvercle pliant (20) est ouvert par rapport au premier axe de charnière (A1) dans la première direction d'ouverture, l'unité de détection émet un premier signal de détection à l'attention du contrôleur.

6. Terminal selon la revendication 1, dans lequel le premier axe de charnière (A1) est dans une direction horizontale.

7. Terminal selon la revendication 5, dans lequel, lorsque l'unité de détection émet le premier signal de détection, le contrôleur est adapté pour modifier le mode opératoire en un mode téléphonique.

8. Terminal selon la revendication 7, comprenant par ailleurs une unité d'affichage pour afficher des données représentant un état du mode opératoire, dans lequel lorsque l'unité de détection émet le premier signal de détection, le contrôleur est adapté pour afficher des données représentant un état de mode en standby sur l'unité d'affichage.

9. Terminal selon la revendication 7, comprenant par ailleurs une unité d'entrée à touches pour changer les couleurs lumineuses de touches sous le contrôle du contrôleur sur la base du mode opératoire, dans lequel, lorsque l'unité de détection émet le premier signal de détection, le contrôleur change les couleurs lumineuses de touches pour réaliser une fonction de mode téléphonique de l'unité d'entrée à touches.

10. Terminal selon la revendication 9, dans lequel, lorsque l'unité de détection émet le premier signal de détection, le contrôleur est adapté pour afficher seulement des couleurs des touches pour réaliser la fonction de mode téléphonique.

11. Terminal selon la revendication 7, dans lequel, lorsqu'au moins l'un des premier et second détecteurs détecte d'abord que le couvercle pliant (20) est ouvert par rapport au second axe de charnière (A2) dans la seconde direction d'ouverture, l'unité de détection est adaptée pour émettre un second signal de détection.

12. Terminal selon la revendication 11, dans lequel la seconde direction est dans une direction verticale du boîtier principal (10) et adjacente à un côté du boîtier principal (10) et en parallèle à celui-ci.

13. Terminal selon la revendication 11, comprenant une unité d'affichage pour afficher des données représentant un état du mode opératoire où, lorsque l'unité de détection émet le second signal de détection, le contrôleur est adapté pour modifier le mode opératoire en un mode de messagerie électronique.

14. Terminal selon la revendication 12, dans lequel le mode de messagerie électronique comprend au moins l'un parmi une création, édition, envoi et réception de messages d'e-mail (message électronique).

15. Terminal selon la revendication 13, dans lequel, lorsque l'unité de détection émet le second signal de détection, le contrôleur est adapté pour afficher des données représentant un état du mode de messagerie pour créer, éditer, envoyer et recevoir des messages e-mail, sur l'unité d'affichage.

16. Terminal selon la revendication 13, comprenant par ailleurs une unité d'entrée à touches pour changer les couleurs lumineuses de touches sous le contrôle du contrôleur sur la base du mode opératoire, dans lequel, lorsque l'unité de détection émet le second signal de détection, le contrôleur est adapté pour changer une couleur lumineuse d'une touche QWERTY parmi les touches de l'unité d'entrée à touches.

17. Terminal selon la revendication 16, dans lequel, lorsque l'unité de détection émet le second signal de détection, le contrôleur est adapté pour afficher seulement une couleur de la touche QWERTY.

18. Terminal selon la revendication 1, dans lequel, lorsque les premier et second détecteurs détectent que le couvercle pliant (20) est ouvert par rapport au premier axe de charnière (A1) dans la première direction d'ouverture, l'unité de détection est adaptée pour émettre un premier signal de détection à l'attention du contrôleur.

19. Terminal selon la revendication 18, dans lequel, lorsque l'unité de détection émet le premier signal de détection, le contrôleur est adapté pour modifier le mode opératoire en un mode téléphonique.

20. Terminal selon la revendication 19, comprenant par ailleurs une unité d'affichage pour afficher des données représentant un état du mode opératoire, dans lequel, lorsque l'unité de détection émet le premier signal de détection, le contrôleur est adapté pour afficher des données représentant un état de mode en standby sur l'unité d'affichage.

21. Terminal selon la revendication 19, comprenant par ailleurs une unité d'entrée à touches pour changer les couleurs lumineuses de touches sous le contrôle du contrôleur sur la base du mode opératoire, dans lequel, lorsque l'unité de détection émet le premier signal de détection, le contrôleur est adapté pour changer les couleurs lumineuses de touches pour réaliser une fonction de mode téléphonique de l'unité d'entrée à touches.

22. Terminal selon la revendication 21, dans lequel, lorsque l'unité de détection émet le premier signal de détection, le contrôleur est adapté pour afficher seulement des couleurs des touches pour réaliser la fonction de mode téléphonique.

23. Terminal selon la revendication 1, dans lequel, lorsqu'au moins l'un parmi les premier et second détecteurs détecte d'abord que le couvercle pliant (20) est ouvert par rapport au second axe de charnière (A2) dans la seconde direction d'ouverture, l'unité de détection est adaptée pour émettre un second signal de détection.

24. Terminal selon la revendication 23, dans lequel la seconde direction est dans une direction verticale du boîtier principal (10) et adjacente à un côté du boîtier principal (10) et en parallèle à celui-ci.

25. Terminal selon la revendication 23, comprenant une unité d'affichage pour afficher des données représentant un état du mode opératoire dans lequel, lorsque l'unité de détection émet le second signal de détection, le contrôleur est adapté pour modifier le mode opératoire en un mode de messagerie électronique.

26. Terminal selon la revendication 13, comprenant par ailleurs une unité d'affichage pour afficher des données représentant un état du mode opératoire, dans lequel le mode de messagerie électronique comprend au moins l'un parmi une création, édition, envoi et réception de messages d'e-mails.

27. Terminal selon la revendication 25, comprenant une unité d'affichage pour afficher des données représentant un état du mode opératoire, dans lequel, lorsque l'unité de détection émet le second signal de détection, le contrôleur est adapté pour modifier le mode opératoire en un mode de messagerie électronique.

28. Terminal selon la revendication 15, comprenant par ailleurs une unité d'entrée à touches pour changer les couleurs lumineuses de touches sous le contrôle du contrôleur sur la base du mode opératoire, dans lequel, lorsque l'unité de détection émet le second signal de détection, le contrôleur est adapté pour changer une couleur lumineuse d'une touche QWERTY parmi les touches de l'unité d'entrée à touches.

29. Terminal selon la revendication 17, dans lequel, lorsque l'unité de détection émet le second signal de détection, le contrôleur est adapté pour afficher seulement une couleur de la touche QWERTY.

30. Procédé pour modifier un mode opératoire, le procédé étant mis en oeuvre dans le terminal de communication portatif (100) selon la revendication 1, le procédé comprenant les étapes suivantes :
émission d'un signal de détection sur la base d'une direction d'ouverture du couvercle pliant ; et
modification du mode opératoire sur la base du signal de détection émis,
**caractérisé en ce que** l'étape d'émission du signal de détection comprend les étapes suivantes,
lorsque le couvercle pliant (20) est ouvert par rapport au premier axe de charnière (A1) :
détection de l'ouverture du couvercle pliant (20) dans la première direction d'ouverture en utilisant les premier et second détecteurs (142, 144) ; et
génération d'un premier signal de détection ;
lorsque le couvercle pliant (20) est ouvert dans la seconde direction d'ouverture par rapport au second axe de charnière (A2),
détection de l'ouverture du couvercle pliant (20) en utilisant les premier et second détecteurs (142, 144) ; et
émission d'un second signal de détection.

31. Procédé selon la revendication 30, dans lequel l'étape de modification du mode opératoire comprend l'étape consistant à, lorsque le premier signal de détection est émis, modifier le mode opératoire en un mode téléphonique pour réaliser au moins une fonction d'appel téléphonique.

32. Procédé selon la revendication 31, comprenant par ailleurs l'étape d'affichage du contenu représentant un état de mode en standby sur une fenêtre d'affichage lorsque le premier signal de détection est émis.

33. Procédé selon la revendication 31, comprenant par ailleurs l'étape de changement d'une couleur lumineuse d'au moins une touche pour réaliser une fonction de mode téléphonique d'un clavier du terminal de communication portatif lorsque le premier signal de détection est émis.

34. Procédé selon la revendication 33, dans lequel, lorsque le premier signal de détection est émis, on affiche seulement la couleur d'au moins une touche pour réaliser la fonction de mode téléphonique du clavier.

35. Procédé selon la revendication 30, dans lequel l'étape de modification du mode opératoire comprend l'étape dans laquelle, lorsque le second signal de détection est émis, le mode opératoire est modifié en un mode de messagerie électronique.

36. Procédé selon la revendication 35, comprenant par ailleurs l'étape de changement d'une couleur lumineuse d'au moins une touche QWERTY d'un clavier du terminal de communication portatif lorsque le second signal de détection est émis.

37. Procédé selon la revendication 36, dans lequel, lorsque le second signal de détection est émis, on affiche seulement la couleur de la touche QWERTY parmi les touches du clavier.

38. Procédé selon la revendication 35, comprenant par ailleurs l'étape d'affichage de données représentant un état du mode de messagerie électronique pour réaliser des fonctions de messagerie électronique sur une fenêtre d'affichage lorsque le second signal de détection est émis.

39. Procédé selon la revendication 38, dans lequel le mode de messagerie électronique comprend au moins l'un parmi une édition d'un message e-mail, une création, envoi et réception du message e-mail édité.

40. Procédé selon la revendication 30, dans lequel la seconde direction d'ouverture comprend une direction verticale parallèle à un côté du boîtier principal (10).

41. Procédé selon la revendication 30, dans lequel le terminal de communication portatif comprend par ailleurs un clavier QWERTY intégré, le procédé comprenant en outre les étapes suivantes :
détection d'une direction d'ouverture du couvercle pliant (20).

42. Procédé selon la revendication 41, dans lequel l'étape d'émission d'un signal de détection comprend l'émission d'un premier signal de détection lorsque le terminal de communication portatif est mis sous tension et que le couvercle pliant (20) est ouvert par rapport au premier axe de charnière (A1) dans la première direction d'ouverture.

43. Procédé selon la revendication 41, dans lequel l'étape de modification du mode opératoire comprend l'étape de modification du mode opératoire en un mode téléphonique lorsque le premier signal de détection est émis.

44. Procédé selon la revendication 42, comprenant par ailleurs l'étape d'affichage de données représentant un état de mode en standby sur une fenêtre d'affichage du terminal de communication portatif lorsque le premier signal de détection est émis.

45. Procédé selon la revendication 42, comprenant par ailleurs l'étape de changement de la couleur lumineuse d'au moins une touche pour réaliser une fonction de mode téléphonique lorsque le premier signal de détection est émis.

46. Procédé selon la revendication 45, dans lequel le procédé comprend par ailleurs l'étape consistant à afficher seulement la couleur de cette au moins une touche pour réaliser la fonction de mode téléphonique lorsque le premier signal de détection est émis.

47. Procédé selon la revendication 41, où l'étape d'émission du signal de détection comprend l'étape d'émission d'un second signal de détection lorsque le terminal de communication portatif est mis sous tension et que le couvercle pliant (20) est ouvert par rapport au second axe de charnière (A2) dans la seconde direction d'ouverture.

48. Procédé selon la revendication 47, dans lequel l'étape de modification du mode opératoire comprend l'étape de modification du mode opératoire en un mode de messagerie électronique lorsque le second signal de détection est émis.

49. Procédé selon la revendication 48, dans lequel le mode de messagerie électronique comprend au moins l'un parmi une création, édition, envoi et réception de messages d'e-mail.

50. Procédé selon la revendication 48, comprenant par ailleurs l'étape de changement d'une couleur lumineuse d'une touche QWERTY d'un clavier du terminal de communication portatif lorsque le second signal de détection est émis.

51. Procédé selon la revendication 50, dans lequel, lorsque le second signal de détection est émis, on affiche seulement une couleur de la touche QWERTY.

52. Procédé selon la revendication 48, comprenant par ailleurs l'étape d'affichage du contenu représentant un état du mode de messagerie électronique sur une fenêtre d'affichage du terminal de communication portatif lorsque le second signal de détection est émis.

53. Procédé selon la revendication 52, dans lequel, lorsque le couvercle pliant (20) est ouvert et que le terminal de communication portatif est mis sous tension, la direction d'ouverture du couvercle pliant (20) est détectée.

54. Procédé selon la revendication 30, dans lequel l'émission d'un signal de détection comprend :
a) l'émission d'un premier signal de détection lorsque les premier et second détecteurs ne peuvent pas détecter concurremment respectivement les premier et second aimants ; et
l'émission d'un second signal de détection lorsque les premier et second détecteurs ne peuvent pas détecter l'aimant correspondant ; ou
b) l'émission d'un premier signal de détection lorsque les premier et second détecteurs ne peuvent pas détecter respectivement les premier et second aimants ; et
l'émission d'un second signal de détection lorsque l'un des détecteurs ne peut pas détecter l'aimant correspondant et lorsque l'autre détecteur détecte l'aimant correspondant.
